(19) Europäisches Patentamt / European Patent Office / Office européen des brevets

(11) **EP 2 897 062 A1**

(12) **EUROPEAN PATENT APPLICATION**

(43) Date of publication:
**22.07.2015 Bulletin 2015/30**

(51) Int Cl.:
***G06F 17/30*** *(2006.01)*

(21) Application number: **14305072.2**

(22) Date of filing: **20.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Burnside, Gérard**
  **91620 Nozay (FR)**
• **Hong, Dohy**
  **94120 Fontenay sous Bois (FR)**

(74) Representative: **Novagraaf Technologies**
**Bâtiment O2**
**2, rue Sarah Bernhardt**
**CS90017**
**92665 Asnières-sur-Seine Cedex (FR)**

(54) **Device and method for ranking linked documents**

(57)     Systems and methods are provided for ranking linked documents (e.g., web pages on the Internet) by modeling how users are expected to use links between the documents. One embodiment is a system that includes a memory and a controller. The memory stores probabilities for documents that each indicate a likelihood of using a link at a document to view another document. The controller is able to assign an initial value to each document, and for each document, to diffuse the integer floor part of the value from the document to other documents based on the probabilities. The controller is further able to rank the documents based on an amount of value that was diffused from each document.

FIG.1

EP 2 897 062 A1

**Description**

**TECHNICAL FIELD**

The invention relates to the field of databases, and to ranking linked documents by order of importance.

**BACKGROUND**

This section introduces aspects that may help facilitate a better understanding of the invention. Accordingly, the statements of this section are to be read in this light and are not to be understood as admissions about what is prior art or what is not prior art.

The computer networks accessible today, including the World Wide Web (the "Web") allow access to an enormous amount of information that increases daily. Web search services generally perform an incremental scan of the Web to generate substantial indexes that can later be searched in response to a user's query.

A difficulty occurs in trying to evaluate the relative merit or relevance of identified documents for ranking them. The ranking of a given web page is based off of the perceived importance of that web page. The perceived importance of each web page is in turn determined based upon the links between that web page and other web pages.

Link farming and other Search Engine Optimization (SEO) techniques are generally frowned upon by search engine providers, because by artificially inflating the scores of websites, SEO techniques degrade the overall quality of web page ranking systems. Therefore search engine providers continue to seek out new techniques in order to reduce the impact of SEO on search quality while improving reliability and speed of ranking.

There is thus a need to implement new techniques for ranking linked documents (e.g., web pages on the Internet), more rapidly and in a reliable manner.

**SUMMARY**

Embodiments described herein implement new techniques for ranking linked documents (e.g., web pages on the Internet) more rapidly and with a better quality of results.

One embodiment is a system that comprises a memory which stores probabilities for documents that each indicate a likelihood of using a link at a document to view another document, called child document. The system also comprises a controller operable to:

- assign an initial value to each document whose related probabilities have been stored in the memory, and
- for each document, diffuse the integer floor part of the value from the document to the child document(s) based on said probabilities;
- rank the documents based on their value after diffusion.

According to various embodiments, the controller is further operable to iteratively repeat diffusing step.

In a further embodiment, the value of a document at iteration step noted n, is defined as equal to H[n]+F[n], with:

$$F[n] = F[n-1] + (d*P-I) \ J[i\_n] \ ((floor)F[n-1]);$$

$$H[n] = H[n-1] + J[i\_n] \ ((floor)F[n-1])$$

with
floor: integer floor part
P: the matrix of said probabilities for said documents, dimension of the matrix being equal to a positive integer N;
I : identity matrix;
i_n: an integer included in the range [1 ; N], at iteration step n
J[i_n]: a diagonal matrix with all entries equal to zero except the i_n-th diagonal term equal to 1;
F[n]: vector of size N at iteration step n;
H[n]: vector of size N at iteration step n;
d : a real number included in the range ]0;1];
and with initials conditions :

F[0] = Alpha (1,..,1), Alpha being a real positive number superior or equal to 1;

H[0] = (0,..,0)

In a further embodiment, the controller is further operable to execute a process, called complementary crawling, that comprises the step of requesting a further document known from the memory, but for which probabilities for accessing child document(s) are unknown of the memory, and the steps of identifying said child document(s) and storing in said memory probabilities for said child document(s).

According to a particular point, the controller is further operable to execute a process, called random discovery crawling, that comprises the step of requesting a further document chosen among documents of the network, for which no related probability has been stored in the memory.

According to various embodiments, the controller is further operable to define a value, noted Beta, predefined in the range [0;1], and to randomly select a value, noted RV, included in the range [0;1] and to process the following conditional steps:

- if RV is superior to Beta, the controller processes a random discovery crawling;
- if RV is inferior or equal to Beta, the controller processes a complementary crawling.

In one aspect, while executing a complementary crawling process through a set of documents, noted UnKnown, which are known from the memory, but for which probabilities for accessing child document(s) are unknown of the memory, the controller is further operable to choose, in the UnKnown set of documents, a document, noted document $n\_r$, and to determine if there exists in UnKnown a document, noted md, whose value is superior to the value of document $n\_r$, and to process the following conditional steps:

- If document md exists then the controller executes complementary crawling process with document md;
- If document md does not exist then the controller executes complementary crawling process with document $n\_r$.

According to various embodiments, diffusing steps and ranking steps are iteratively repeated with said documents and further documents whose probabilities have been stored in the memory.

In a particular aspect, by defining a set of documents, noted Known, whose probabilities for accessing child document(s) are known from the memory, and by defining a set of documents, noted UnKnown, which are known from the memory, but for which probabilities for accessing child document(s) are unknown of the memory, the controller is further operable to calculate an estimate, noted Est_f(x), of the weight of a predefined percentage, noted x, of documents included in Known, with the formula :

$$Est\_f(x) = f\_diff(x) \times (1-d*(1-t)/2) / (t^{1-1/f\_0})$$

with t corresponding to the ratio between the number of documents included in Unknown and the number of documents included in Known, and

where $f\_0$ is $\max\_i\{(H+F)\_i\}*N$ for i = 1 to N and

$f\_diff(x) = \sum\_{1..x*N} \{(H+F)\_s(r)\}*N/x$, with r = 1 to x, and s(r) being the coordinate position of (H+F) which has the r-th higher value.

According to another particular aspect, the controller stops executing crawling processes when Est_f(x) reaches a predefined threshold.

Another embodiment is a method for ranking documents of a network, said method comprising:

- storing probabilities for documents that each indicate a likelihood of using a link at a document to view another document, called child document;
- assigning an initial value to each document whose related probabilities have been stored, and,
- for each document, diffusing the integer floor part of the value from the document to the child document(s) based on said probabilities;
- ranking the documents based on their value after diffusion.

According to various embodiments, said method further comprises iteratively repeating said diffusing step.

In a further embodiment, the value of a document at iteration step noted n, is defined as equal to H[n]+F[n], with:

$$F[n] = F[n-1] + (d*P-I) \, J[i\_n] \, ((floor)F[n-1]);$$

$$H[n] = H[n-1] + J[i\_n] \, ((floor)F[n-1])$$

with

floor: integer floor part

P: the matrix of said probabilities for said documents, dimension of the matrix being equal to a positive integer N

I : identity matrix;

i_n: an integer included in the range [1 ; N], at iteration step n

J[i_n]: a diagonal matrix with all entries equal to zero except the i_n-th diagonal term equal to 1;

F[n]: vector of size N at iteration step n;

H[n]: vector of size N at iteration step n;

d : a real number included in the range ]0;1];

and with initials conditions :

F[0] = Alpha (1,..,1), Alpha being a real positive number superior or equal to 1;

H[0] = (0,..,0).

According to a particular point, the method further comprises a process, called complementary crawling, that comprises the step of requesting a further document known from the memory, but for which probabilities for accessing child document(s) are unknown of the memory, and the steps of identifying said child document(s) and storing in said memory probabilities for said child document(s).

Various embodiments also concern a non-transitory computer readable medium embodying programmed instructions which, when executed by a processor, are operable for performing a method as detailed above.

Additional aspects will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

Other exemplary embodiments (e.g., methods and computer-readable media relating to the foregoing embodiments) may be described below.

**BRIEF DESCRIPTION OF THE DRAWINGS**

Some embodiments are now described, by way of example only, and with reference to the accompanying drawings. The same reference number represents the same element or the same type of element on all drawings.

FIG. 1 is a block diagram of an exemplary linked system of documents of a network in an exemplary embodiment.
FIG. 2 is a block diagram that includes a ranking system in an exemplary embodiment.
FIG. 3 is a flowchart illustrating a method for operating a ranking system in an exemplary embodiment.
FIG. 4 is a flowchart illustrating additional details of operating a ranking system in an exemplary embodiment.
FIG. 5 is a flowchart illustrating other additional details of operating a ranking system in an exemplary embodiment.
FIG. 6 is a block diagram illustrating an exemplary set of web pages and links between them.
FIG. 7 is a block diagram illustrating the set of web pages of FIG.6 after having discovered a link from document F pointing to document E.
FIG. 8 is a block diagram illustrating the set of web pages of FIG.7 after having discovered a further document M and a link from document M pointing to document E.

**DETAILED DESCRIPTION**

The figures and the following description illustrate specific exemplary embodiments. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

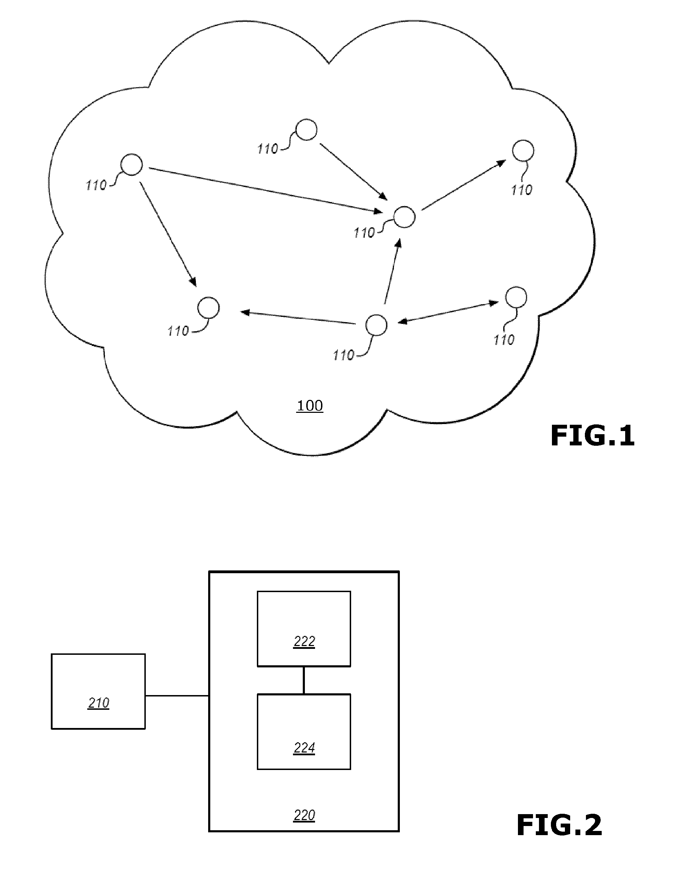

FIG. 1 is a block diagram of an exemplary linked system of documents 110 of a network 100 in an exemplary embodiment. As used herein, a document is a collection of digital content that can be viewed on a computer. This digital content can include text, graphics, and/or video. For example, a document could be a web page, an entire web site, an entry in a database, etc.

In FIG. 1, a variety of links exist between the documents. The information in each link allows a user to identify another document. Thus, when a user selects a link on one document, he can view a document that the link points to. For example, when the documents are web pages, links may comprise hyperlinks that enable a user's browser to "visit" other web pages. Thus, a user could select one link displayed at one web page in order to view another web page.

Block diagram 200 of FIG. 2 illustrates an exemplary ranking system 220 that can be used to implement ranking methods for determining the relative importance of documents such as web pages. Ranking system 220 comprises any system, component, or device operable to model link usage between documents. In this embodiment, ranking system 220 includes memory 222 and controller 224.

Memory 222 comprises any system, component, or device operable to store information describing linked documents/nodes in a computer-readable format, while controller 224 comprises any system, device, or component operable to rank the documents based on the information stored in memory 222. Specifically, controller 224 has been enhanced to use a flow model of link usage in order to rank the documents.

Once the documents are ranked, the rankings can be provided in response to user queries from an electronic client 210. For example, if each document is a web page on the Internet, the rankings can help controller 224 to generate a sorted list of web pages for the user. Similarly, if each document is stored in memory 222 as a linked article, the rankings can be used by controller 224 to select an article to provide to the user. Controller 224 can be implemented, for example, as custom circuitry, as a processor of a server executing programmed instructions stored in an associated memory, or some combination thereof.

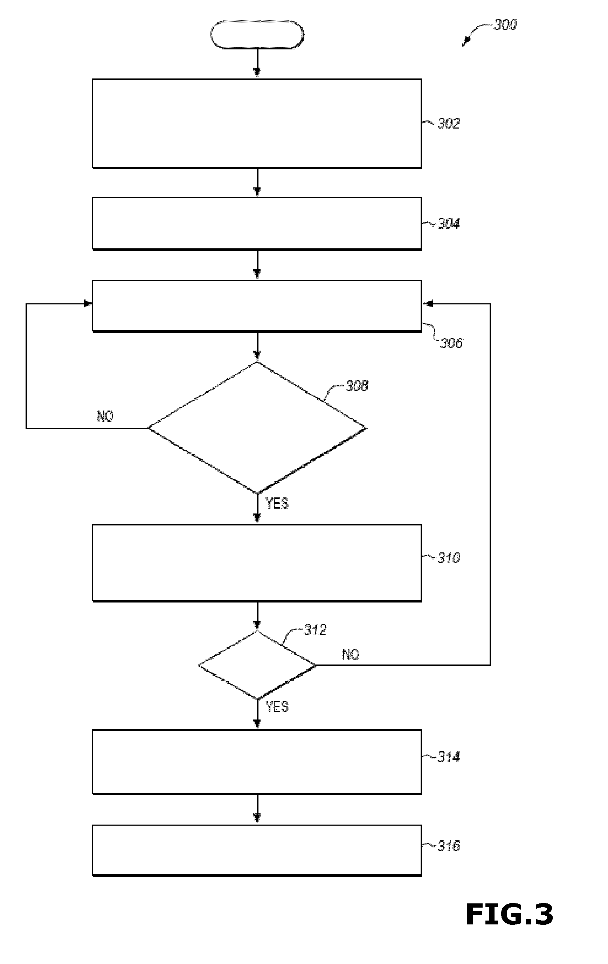

Further details of the operation of ranking system 220 will be discussed with regard to FIG. 3. Assume, for this embodiment, that memory 222 is currently storing data that describes a linked database of documents. The links between the documents can be used in order to view the documents.

FIG. 3 is a flowchart illustrating a method 300 for operating a ranking system in an exemplary embodiment. The steps of method 300 are described with reference to ranking system 220 of FIG. 2, but those skilled in the art will appreciate that method 300 may be performed in other systems. The steps of the flowcharts described herein are not all inclusive and may include other steps not shown. The steps described herein may also be performed in an alternative order.

In step 302, controller 224 acquires a set of probabilities from memory 222. Each probability indicates the likelihood of a user selecting a link at one document in order to view another document. Said link which leads to another document may be considered, similarly as said other document, as a child document of said one document. For example, the probabilities can indicate the expected browsing patterns of users within a network of web pages.

In step 304, controller 224 assigns an initial value to each document. The initial value for each document is a placeholder that indicates the initial importance of each document. In one embodiment, each document is assigned the same initial value.

After the initial value has been assigned to each document, controller 224 attempts to model how that value will diffuse from each document to its peers. This "diffusion" technique is a way to model how users will follow the links on the documents to view other documents on the database. This diffusion concept rests on the notion that documents that generate more "hits" or "traffic" than their peers are more important than others.

To model the diffusion process, controller 224 selects an individual document (in step 306). Controller 224 then determines in step 308 if the integer floor part of the document value is zero or not.

If the integer floor part of the document value is zero, then another document is selected in step 306.

However, if the integer floor part of the document value is superior to zero, then controller 224 diffuses the integer floor part of the value for the document along its outgoing links to other documents in step 310, based on the probabilities. In one embodiment, controller 224 increases the value of each document that is linked to the current document, and then decreases the value of the current document by the diffused value. In particular, as detailed hereafter, the corresponding F vector entry is decreased.

According to a preferred embodiment, the value of a document at iteration step noted n, is defined as equal to H[n]+F[n] in the following manner :

$$F[n] = F[n-1] + (d*P-I) \, J[i\_n] \, ((floor)F[n-1]);$$

What can also be written:

F[n] = F[n-1] + d*P*(J[i_n] (floor) F[n-1])- J[i_n] ((floor)F[n-1]); the term "d*P*(J[i_n] (floor) F[n-1])" corresponding to the value diffused by document i_n and the term "J[i_n] ((floor)F[n-1])" corresponding to the value that has to be removed from the current value attached to document i_n.

$$H[n] = H[n-1] + J[i\_n] ((floor)F[n-1])$$

with
floor: integer floor part
P: the matrix of said probabilities for said documents, dimension of the matrix being equal to a positive integer N;
I : identity matrix;
i_n: an integer included in the range [1 ; N], at iteration step n;
J[i_n]: a diagonal matrix with all entries equal to zero except the i_n-th diagonal term equal to 1;
F[n]: vector of size N at iteration step n;
H[n]: vector of size N at iteration step n;
d : a real number included in the range ]0;1];
and with initials conditions :
F[0] = Alpha (1,..,1), Alpha being a real positive number superior or equal to 1;
H[0] = (0,..,0)

According to various embodiments, value of i_n may be provided at each iteration step with the following equation:

$$i\_n+1=i\_n + 1 \ (modulo \ N) \ with \ i\_0=0,$$

d: a damping factor corresponding to a real number to be chosen in the range]0;1], and which may be defined as equal to 1 to be inactivated.

And with initials conditions:

F[0] = Alpha (1,..,1)
Alpha >=1
H[0] = (0,..,0)

Thus, the value diffused from the current document can be conceptually modeled as bucket(s) of water traveling outward from the current document to its neighbors (children). Fractional part of the remaining value of the current document may be considered as equivalent to a remaining not full bucket. The lost "buckets" increase the value of the neighbors, while reducing the value of the current document.

Iteratively, the diffusion process can thus continue, and value can diffuse from multiple documents into other linked documents. Furthermore, if enough value enters a document, the document may again have a high enough value that the document diffuses again.

In step 312, controller 224 determines whether the diffusion process has finished.

Typically, the process finishes when integer floor part of each term of the vector F is equal to zero, i.e. when no entry in F has a floor strictly greater than zero. After the process has finished in step 312, controller 224 ranks the documents based on their value. Controller 224 can then rank the documents in order of importance from highest score to lowest (step 314).

After the documents have been ranked, controller 224 can process the documents in step 316. For example, controller 224 may provide a ranked list of the documents to client 210.

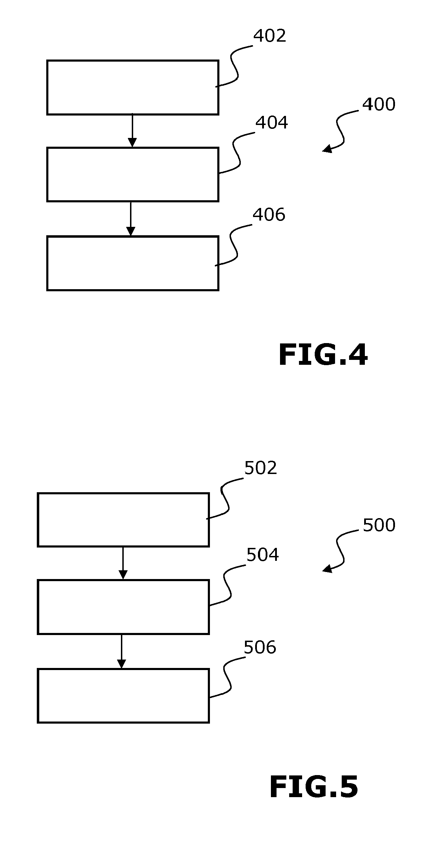

FIG. 4 is a flowchart illustrating a method 400 for discovering the links in a document which is known from the memory in view of storing related probabilities and thus discovering new terms of matrix P, improving thus the reliability of the ranking method.

In particular, the controller defines a set of documents, noted Known, whose probabilities for accessing child document(s) are known from the memory. The controller also defines a set of documents, called Unknown, composed of child documents of other documents, probabilities for said other document being already stored in the memory, but probabilities for said child documents being not yet stored in the memory and thus needing a request from the controller to said other document to know its child document(s) and related probabilities to be stored in the memory.

According to various embodiments, the controller is thus operable to execute a crawling process, called complementary crawling, which includes the step of requesting 402, preferably randomly, a further document, known from the memory 222 as a child document of another document, but for which probabilities for accessing its child document(s), ie other linked document(s), are unknown of the memory.

After requesting step, the controller 224 identifies at step 404 the links to the child document(s) of said further document and stores at step 406 in said memory probabilities for said child document(s) that each indicate(s) a likelihood of using a link at said child document to view another document.

The crawled document is thus a document, chosen randomly among the children of documents of said Unknown set of documents network. More precisely, controller 224 requests an outgoing link (child) of a document included in said Unknown set to determine its own outgoing link(s) and store probabilities for said child(ren) that each indicate(s) a likelihood of using a link at said child document to view another document.

FIG.5 is a flowchart illustrating a method 500 for discovery of a further document and its child(ren).

Accordingly, in various embodiments, the controller 224 is further operable to execute a further process, called random discovery. Said random discovery includes the step of requesting 502 a further document M chosen, preferably randomly, among the N documents of the network 100, for which no related probability has been stored in the memory. In particular, said further document is, before requesting step, unknown from the memory, as well as considering said further document as a child document of other document or as a parent document.

In other words, said further document is a document for which said memory stores no probability that would enable to establish the existence of a link with other document whose probabilities have already been stored.

After requesting step, the controller 224 identifies at step 504 the links to its child documents of said further document and stores at step 506 in said memory probabilities for said child documents that each indicate a likelihood of using a link at said child document to view another document.

In various embodiments, the controller 224 is further operable to define a value, noted Beta, predefined in the range [0;1], and to randomly select a value, noted RV, included in the range [0;1] and to process the conditional steps:

- if RV is superior to Beta, the controller 224 processes a random discovery crawling;
- if RV is inferior or equal to Beta, the controller 224 processes a complementary crawling.

While executing said complementary crawling process, the controller 224 may choose, in the UnKnown set of documents, a document, noted document $n\_r$, and determine if there exists, in UnKnown, a document, noted md, whose value is superior to the value of document $n\_r$, and to process the conditional steps:

- If document md exists then the controller executes complementary crawling process with document md;
- If document md does not exist then the controller executes complementary crawling process with document $n\_r$.

Such a point enables to accelerate the ranking operation

Once one or a plurality of further documents have been crawled according to the process detailed above, ranking method 300 described above may thus be iteratively repeated for operating a ranking of all the documents including the one or those discovered according to method 400 and/or 500.

The controller 224 is further operable to calculate an estimate, noted Est_f(x), of the weight of a predefined percentage, noted x, of documents included in Known, with the formula:

$$Est\_f(x) = f\_diff(x) \times (1-d*(1-t)/2) / (t^{1-1/f\_0})$$

with t corresponding to the ratio between the number of documents included in Unknown and the number of documents included in Known,
and
Where $f\_0$ is $max\_i\{(H+F)\_i\}*N$ for i = 1 à N and
$f\_diff(x) = sum\_{1..x*N} \{(H+F)\_s(r)\}*N/x$, with r = 1 à x, with s(r) the coordinate of vector H+F for which this coordinate is the r-th highest.

According to particular embodiments, the controller stops executing crawling processes when Est_f(x) reaches a threshold relevant for the particular intended use of the ranking method. Such threshold may be adjusted in relation with the intended use of the ranking method.

Such method provides a top x% most important nodes with a very high precision based on a limited knowledge of the full data graph information corresponding to matrix P. Experiment have shown that the knowledge of 2% of N nodes is enough to obtain the top x% list with an error of about 10%. This can be compared to existing techniques such as OPIC where it has been shown that several factors of N crawls are necessary to get a guaranteed precision of several tens of percents.

In various embodiments, the diffusion is modeled with a damping factor. Activation of said damping factor consists in defining a value for d which is different from 1.

Using the method described above, a document ranking system can be used that reduces the importance of documents that are self-linking with respect to their peers and that converges faster thanks to diffusion of the floor part of the value of each documents to its child(ren).

**Example**

In the following examples, additional processes, systems, and methods are described in the context of a server having a controller that assigns ranks to web pages.

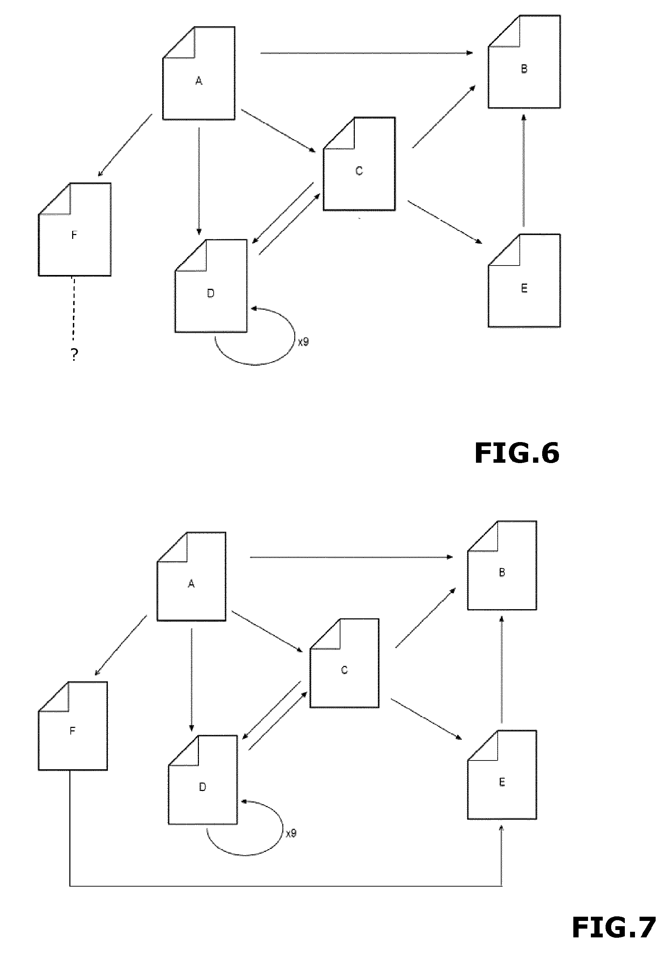

FIG. 6 is a block diagram illustrating an exemplary set of web pages. According to FIG. 6, there are six different web pages, one web page (B) has no outgoing links, one web page (A) has no incoming links, and one web page (D) exhibits a large number of self-links. As used herein, each web page is also referred to interchangeably as a "node". Probabilities related to the links between said documents are memorized in memory 222. Page A has an outgoing link pointing to page (F), but outgoing links (children) of page F are not yet known from the memory.

If the web pages were ranked only based on the total number of links for each page, or based on the number of outgoing links for each page, web page D would be ranked highest, because of its large number of outgoing links which go back to page D. Thus, a cursory review of the web pages does not give a good indication of which web page is actually the most important with respect to its peers.

Assume for this embodiment that all of the web pages include keywords in a user's search query, and further assume that a server of a search engine (having an internal controller 224 and memory 222) is attempting to rank the importance of these relevant web pages to determine which ones to present to the user. To this end, controller 224 starts by accessing probability information stored in memory 222.

Memory 222 stores a probability matrix P indicating the likelihood of a user using the links to view the web pages, shown below:

$$
P = \begin{array}{c} \\ A \\ B \\ C \\ D \\ E \\ F \\ ... \\ ... \\ ... \end{array}
\begin{array}{cccccccccc}
A & B & C & D & E & F & ... & ... & ... \\
\left[\begin{array}{cccccccc}
0 & 0 & 0 & 0 & 0 & ... & ... & ... & ... \\
1/4 & 0 & 1/3 & 0 & 1 & ... & ... & ... & ... \\
1/4 & 0 & 0 & 1/10 & 0 & ... & ... & ... & ... \\
1/4 & 0 & 1/3 & 9/10 & 0 & ... & ... & ... & ... \\
0 & 0 & 1/3 & 0 & 0 & ... & ... & ... & ... \\
1/4 & 0 & 0 & 0 & 0 & ... & ... & ... & ... \\
0 & 0 & 0 & 0 & 0 & ... & ... & ... & ... \\
0 & 0 & 0 & 0 & 0 & ... & ... & ... & ... \\
0 & 0 & 0 & 0 & 0 & ... & ... & ... & ...
\end{array}\right]
\end{array}
$$

Dimension of the matrix is N, with N a positive integer.

In P, a specific row is indicated with the letter i, while a column is represented with the letter j. Web page A corresponds to the first row/column, web page B corresponds to the second row/column, and so on. Furthermore, $P_{ij}$ indicates the likelihood of using a link from web page j to view web page i. document i is thus considered as a child document of document j.

Web page B has no outgoing links, and thus there is no probability of using a link to view another web page from web page B. Controller 224 may normalize the chances of viewing each web page from web page B by making all of these values in the probability matrix equal to 1/N.

As a further initialization step, controller 224 generates two vectors that each have a length of N (the number of nodes in the linked database). H[n] will be used to indicate the amount of fluid that has diffused from a given node over time at iteration step n, and F[n] will be used to indicate the current quantity of fluid of a given node at iteration step n. In this example, H0 is initialized to zeroes, while F0 is initialized to one multiplied by Alpha, with ALPHA being an integer superior or equal to one, as shown below.

$$H_0 = \begin{Bmatrix} 0 \\ 0 \\ 0 \\ 0 \\ 0 \\ 0 \end{Bmatrix} \qquad F_0 = Alpha * \begin{Bmatrix} 1 \\ 1 \\ 1 \\ 1 \\ 1 \\ 1 \end{Bmatrix}$$

In this example, Alpha is chosen equal to one
Controller 24 processes the following equation starting with n=1

$$F[n] = F[n-1] + (d*P-I) \; J[i\_n] \; (floor)F[n-1])$$

$$H[n] = H[n-1] + J[i\_n] \; ((floor)F[n-1])$$

In this example, damping factor d is chosen equal to 1/2.
What leads to, for the first iteration and where i_1 can be chosen as 1:

$$F[1] = F[0] + (0.5*P-I) \; J[i\_1] \; ((floor)F[0])$$

Controller 24 iteratively repeats processing of the two equations by incrementing n with a step of one while integer floor part of each coordinate of F is different from zero, which occurs in this case after 5 iterations, so that:

$$H[5] + F[5] = \begin{Bmatrix} 1 \\ 1.791\bar{6} \\ 1.175 \\ 1.741\bar{6} \\ 1.1\bar{6} \\ 1.125 \\ ... \end{Bmatrix}$$

Thus, the nodes, ranked in order, are B, D, C, E, F, A. Web page D has twelve total links, but its ranking is actually less than B, because the value of the nine self-links are substantially discounted. Controller 224 then identifies web page B as the most important relevant web page for the user's search request, and transmits the internet address of web page B to the user so that the user may use a link to view web page B.

Diffusion of the floor part of the value of each documents to its child(ren) leads to an efficient and fast data ranking.

To improve the results of ranking, it may be helpful to estimate the value of more documents, and thus to discover other terms of the matrix, that is to say discovering other links between documents of the networks.

Thus according to the method 400 illustrated at figure 4, the controller may request document F to identify its outgoing link(s). The controller 224 thus identifies that document F comprises an outgoing link that points to document E as illustrated at FIG.7. Controller 224 thus updates the calculus of probabilities corresponding to the terms of matrix P based on the identification of the link between document F and document E.

The updated probability matrix P is defined as follows:

$$P = \begin{array}{cc} & \begin{array}{cccccccc} A & B & C & D & E & \mathbf{F} & ... & ... & ... \end{array} \\ \begin{array}{c} A \\ B \\ C \\ D \\ E \\ F \\ ... \\ ... \\ ... \end{array} & \left( \begin{array}{cccccccc} 0 & 0 & 0 & 0 & 0 & \mathbf{0} & ... & ... & ... \\ 1/4 & 0 & 1/3 & 0 & 1 & \mathbf{0} & ... & ... & ... \\ 1/4 & 0 & 0 & 1/10 & 0 & \mathbf{0} & ... & ... & ... \\ 1/4 & 0 & 1/3 & 9/10 & 0 & \mathbf{0} & ... & ... & ... \\ 0 & 0 & 1/3 & 0 & 0 & \mathbf{1} & ... & ... & ... \\ 1/4 & 0 & 0 & 0 & 0 & \mathbf{0} & ... & ... & ... \\ 0 & 0 & 0 & 0 & 0 & \mathbf{0} & ... & ... & ... \\ 0 & 0 & 0 & 0 & 0 & \mathbf{0} & ... & ... & ... \\ 0 & 0 & 0 & 0 & 0 & \mathbf{0} & ... & ... & ... \end{array} \right) \end{array}$$

Controller 224 may also execute the method 500 for discovery of a further document and its child(ren).

Accordingly, the controller 224 requests a further document M chosen, preferably randomly, among the N documents of the network 100, for which no related probability has been stored in the memory.

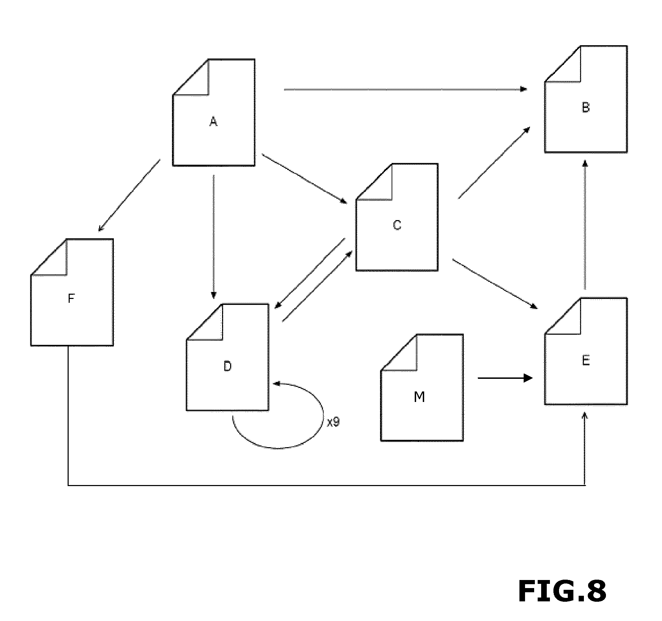

The controller 224 then identifies the link(s) to its child document(s). In the example of figure 8, document M has an outgoing link that points to document E. Controller 224 thus updates the probabilities corresponding to the terms of matrix P based on the identification of the link between document M and document E.

The updated probability matrix P is defined as follows:

$$P = \begin{array}{cc} & \begin{array}{cccccccc} A & B & C & D & E & F & ... & \mathbf{M} & ... \end{array} \\ \begin{array}{c} A \\ B \\ C \\ D \\ E \\ F \\ ... \\ \mathbf{M} \\ ... \end{array} & \left( \begin{array}{ccccccccc} 0 & 0 & 0 & 0 & 0 & 0 & ... & \mathbf{0} & ... \\ 1/4 & 0 & 1/3 & 0 & 1 & 0 & ... & \mathbf{0} & ... \\ 1/4 & 0 & 0 & 1/10 & 0 & 0 & ... & \mathbf{0} & ... \\ 1/4 & 0 & 1/3 & 9/10 & 0 & 0 & ... & \mathbf{0} & ... \\ 0 & 0 & 1/3 & 0 & 0 & 1 & ... & \mathbf{1} & ... \\ 1/4 & 0 & 0 & 0 & 0 & 0 & ... & \mathbf{0} & ... \\ 0 & 0 & 0 & 0 & 0 & 0 & ... & \mathbf{0} & ... \\ 0 & 0 & 0 & 0 & 0 & 0 & ... & \mathbf{0} & ... \\ 0 & 0 & 0 & 0 & 0 & 0 & ... & \mathbf{0} & ... \end{array} \right) \end{array}$$

As explained, once said documents F and M have been crawled according to the processes detailed above, ranking method 300 described above may thus be iteratively repeated for operating a ranking of all the documents including the one or those discovered according to method 400 and/or 500.

Values of document with updated matrix P thus become (the example above finishes after 9 iterations):

$$H[9] + F[9] = \left\{ \begin{array}{c} 1 \\ 2.291\bar{6} \\ 1.175 \\ 1.741\bar{6} \\ 2.1\bar{6} \\ 1.125 \\ ... \\ 1 \\ ... \end{array} \right\}$$

According to such estimation of the value of the documents, document B still has the higher score and thus is the most important relevant web page, but one can also notice that document E now outranks document D.

A person skilled in the art would readily recognize that steps of various above-described methods can be performed by programmed computers.

The functions of the various elements described above and shown in the figures, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital storage media. The embodiments are also intended to cover computers programmed to perform said steps of methods described herein.

Although multiple embodiments of the present invention have been illustrated in the accompanying Drawings and described in the foregoing Detailed Description, it should be understood that the present invention is not limited to the disclosed embodiments, but is capable of numerous rearrangements, modifications and substitutions without departing from the invention as set forth and defined by the following claims.

In various embodiments, particular steps of the methods described above, may be executed in different order. Furthermore, additional steps may also be provided.

**Claims**

1. A system for ranking documents (A, B, C, D, E) of a network (100), said system comprising a memory (222) which stores (302) probabilities for documents (A, B, C, D, E) that each indicate a likelihood of using a link at a document to view another document, called child document; and a controller (224) operable to:

   - assign (304) an initial value (H) to each document (A, B, C, D, E) whose related probabilities have been stored in the memory (222), and
   - for each document (A, B, C, D, E), diffuse (310) the integer floor part of the value from the document to the child document(s) based on said probabilities ;
   - rank (314) the documents (A, B, C, D, E) based on their value after diffusion.

2. The system of claim 1, wherein the controller (224) is further operable to iteratively repeat diffusing step.

3. The system of claim 2, wherein the value of a document at iteration step noted n, is defined as equal to H[n]+F[n], with:

$$F[n] = F[n-1] + (d*P-I) \; J[i\_n] \; ((floor)F[n-1]);$$

$$H[n] = H[n-1] + J[i\_n] \; ((floor)F[n-1])$$

with
floor: integer floor part
P: the matrix of said probabilities for said documents, dimension of the matrix being equal to a positive integer N
I : identity matrix;
i_n: an integer included in the range [1 ; N], at iteration step n
J[i_n]: a diagonal matrix with all entries equal to zero except
the i_n-th diagonal term equal to 1;
F[n]: vector of size N at iteration step n;
H[n]: vector of size N at iteration step n;
d : a real number included in the range ]0;1];

and with initials conditions :

F[0] = Alpha (1,..,1), Alpha being a real positive number superior or equal to 1;
H[0] = (0,..,0)

4.  The system of any one of claims 1 to 3, wherein the controller (224) is further operable to execute a process, called complementary crawling, that comprises the step of requesting (402) a further document (F) known from the memory, but for which probabilities for accessing child document(s) (E) are unknown of the memory, and the steps of identifying (404) said child document(s) and storing (406) in said memory probabilities for said child document(s).

5.  The system of any one of claims 1 to 4, wherein the controller (224) is further operable to execute a process, called random discovery crawling, that comprises the step of requesting a further document (M) chosen among documents of the network (100), for which no related probability has been stored in the memory (222).

6.  The system of claims 4 and 5, wherein the controller (224) is further operable to define a value, noted Beta, predefined in the range [0;1], and to randomly select a value, noted RV, included in the range [0;1] and to process the following conditional steps:

- if RV is superior to Beta, the controller (224) processes a random discovery crawling;
- if RV is inferior or equal to Beta, the controller (224) processes a complementary crawling.

7.  The system of claim 6, wherein, while executing a complementary crawling process through a set of documents, noted UnKnown, which are known from the memory, but for which probabilities for accessing child document(s) (E) are unknown of the memory, the controller (224) is further operable to choose, in the UnKnown set of documents, a document, noted document n_r, and to determine if there exists in UnKnown a document, noted md, whose value is superior to the value of document n_r, and to process the following conditional steps:

- If document md exists then the controller executes complementary crawling process with document md;
- If document md does not exist then the controller executes complementary crawling process with document n_r.

8.  The system of any one of claims 1 to 7, wherein diffusing steps and ranking steps are iteratively repeated with said documents and further documents whose probabilities have been stored in the memory (222).

9.  The system of any one of claims 1 to 8 taken in combination with claim 3, wherein, by defining a set of documents, noted Known, whose probabilities for accessing child document(s) are known from the memory, and by defining a set of documents, noted UnKnown, which are known from the memory, but for which probabilities for accessing child document(s) are unknown of the memory,
the controller (224) is further operable to calculate an estimate, noted Est_f(x), of the weight of a predefined percentage, noted x, of documents included in Known, with the formula :

$$ Est\_f(x) = f\_diff(x) \times (1-d*(1-t)/2) / (t^{1-1/f\_0}) $$

with t corresponding to the ratio between the number of documents included in Unknown and the number of documents included in Known, and
where f_0 is $\max_i\{(H+F)\_i\}*N$ for i = 1 to N and f_diff(x) = $\text{sum}_{1..x*N} \{(H+F)\_s(r)\}*N/x$, with r = 1 to x, and s(r) being the coordinate position of (H+F) which it the r-th higher value.

10. The system of claim 9, wherein the controller stops executing crawling processes when Est_f(x) reaches a predefined threshold.

11. A method for ranking documents (A, B, C, D, E) of a network (100), said method comprising:

- storing (302) probabilities for documents (A, B, C, D, E) that each indicate a likelihood of using a link at a document to view another document, called child document;
- assigning (304) an initial value (H) to each document (A, B, C, D, E) whose related probabilities have been stored, and,

- for each document (A, B, C, D, E), diffusing (310) the integer floor part of the value from the document to the child document(s) based on said probabilities ;
- ranking (314) the documents (A, B, C, D, E) based on their value after diffusion.

12. The method of claim 11, wherein said method further comprises iteratively repeating said diffusing step.

13. The method of claim 12, wherein the value of a document at iteration step noted n, is defined as equal to H[n]+F[n], with:

$$F[n] = F[n-1] + (d*P-I) \, J[i\_n] \, ((floor)F[n-1]);$$

$$H[n] = H[n-1] + J[i\_n] \, ((floor)F[n-1])$$

with
floor: integer floor part
P: the matrix of said probabilities for said documents, dimension of the matrix being equal to a positive integer N
I : identity matrix;
i_n: an integer included in the range [1 ; N], at iteration step n
J[i_n]: a diagonal matrix with all entries equal to zero except the
i_n-th diagonal term equal to 1;
F[n]: vector of size N at iteration step n;
H[n]: vector of size N at iteration step n;
d : a real number included in the range ]0;1];
and with initials conditions :

F[0] = Alpha (1,..,1), Alpha being a real positive number superior or equal to 1;
H[0] = (0,..,0).

14. The method of any one of claims 11 to 13, wherein the method further comprises a process, called complementary crawling, that comprises the step of requesting (402) a further document (F) known from the memory, but for which probabilities for accessing child document(s) (E) are unknown of the memory, and the steps of identifying (404) said child document(s) and storing (406) in said memory probabilities for said child document(s).

15. A non-transitory computer readable medium embodying programmed instructions which, when executed by a processor, are operable for performing a method according to any one of claims 11 to

**FIG.1**

**FIG.2**

FIG.3

402

404

406

400

**FIG.4**

502

504

506

500

**FIG.5**

**FIG.6**

**FIG.7**

**FIG.8**

Europäisches
Patentamt

European
Patent Office

Office européen
des brevets

# EUROPEAN SEARCH REPORT

Application Number

EP 14 30 5072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 285 999 B1 (PAGE LAWRENCE [US]) 4 September 2001 (2001-09-04) * pages 3-5 * * figure 2 * | 1-15 | INV. G06F17/30 |
| X | SERGE ABITEBOUL ET AL: "Adaptive on-line page importance computation", PROCEEDINGS OF THE TWELFTH INTERNATIONAL CONFERENCE ON WORLD WIDE WEB , WWW '03, 24 May 2003 (2003-05-24), pages 280-290, XP055133233, New York, New York, USA DOI: 10.1145/775152.775192 ISBN: 978-1-58-113680-7 * page 280, left-hand column * * page 281, left-hand column - page 283, left-hand column * * page 285, right-hand column - page 286, left-hand column * | 1-15 | |

| TECHNICAL FIELDS SEARCHED (IPC) |
|---|
| G06F |

The present search report has been drawn up for all claims

| Place of search | Date of completion of the search | Examiner |
|---|---|---|
| Munich | 5 August 2014 | Michalski, Stéphane |

EPO FORM 1503 03.82 (P04C01)

**ANNEX TO THE EUROPEAN SEARCH REPORT
ON EUROPEAN PATENT APPLICATION NO.**                EP 14 30 5072

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2014

| Patent document cited in search report | Publication date | Patent family member(s) | Publication date |
|---|---|---|---|
| US 6285999 B1 | 04-09-2001 | US 6285999 B1 | 04-09-2001 |
| | | US 6799176 B1 | 28-09-2004 |
| | | US 7058628 B1 | 06-06-2006 |
| | | US 7908277 B1 | 15-03-2011 |
| | | US 8126884 B1 | 28-02-2012 |
| | | US 8131715 B1 | 06-03-2012 |
| | | US 8131717 B1 | 06-03-2012 |
| | | US 8195651 B1 | 05-06-2012 |
| | | US 8521730 B1 | 27-08-2013 |
| | | US 8725726 B1 | 13-05-2014 |

EPO FORM P0459

For more details about this annex : see Official Journal of the European Patent Office, No. 12/82